# FASCICULE DE BREVET EUROPEEN

(11) **EP 4 263 195 B1**
(45) Date de publication et mention de la délivrance du brevet: **05.02.2025**
(21) Numéro de dépôt: 21848271.9
(22) Date de dépôt: 10.12.2021
(51) Int. Cl.: B29D 30/06

(54) **TEXTURE DE SURFACE DE BANDE DE ROULEMENT DE PNEUMATIQUE**
OBERFLÄCHENTEXTUR FÜR EINE REIFENLAUFFLÄCHE
SURFACE TEXTURE FOR A TIRE TREAD

(30) Priorité: 18.12.2020 FR 2013680
(43) Date de publication de la demande: 25.10.2023
(73) Titulaire: Compagnie Générale des Etablissements Michelin, 63000 Clermont-Ferrand (FR)
(72) Inventeur: NEAU, Xavier, 63040 Clermont-Ferrand CEDEX 9 (FR); BERTHIER, Romain, 63040 Clermont-Ferrand CEDEX 9 (FR); LESCUR, Thomas, 63040 Clermont-Ferrand CEDEX 9 (FR)
(74) Mandataire: M.F.P. Michelin
(86) Numéro de dépôt international: PCT/FR2021/052271
(87) Numéro de publication internationale: WO 2022/129745

(56) Documents cités:
- EP-A1- 2 799 250
- JP-A- H07 257 111

## Description

### Domaine de l'invention

La présente invention est relative à l'état de surface des bandes de roulement des pneumatiques cuits dans un moule de vulcanisation fabriqué par impression en trois dimensions (impression 3D).

L'invention propose une texture de la surface de roulement de la bande de roulement d'un pneumatique qui représente un compromis optimal entre le coût, l'esthétique, et les performances d'adhérences du pneumatique.

### Définitions

Par convention, on définit un repère (O, XX', YY', ZZ'), dont le centre O coïncide avec le centre géométrique du pneumatique, les directions circonférentielles XX', axiale YY', et radiale ZZ' désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

De façon générale, l'homme du métier définit la bande de roulement d'un pneumatique principalement à l'aide des caractéristiques de conception suivantes : la surface de roulement permettant de définir la largeur totale de la bande de roulement, et la sculpture.

Par « surface de roulement » de la bande de roulement, on entend la surface qui regroupe l'ensemble des points du pneumatique qui vont entrer en contact avec un sol dans des conditions usuelles de roulage. Ces points qui vont entrer en contact avec le sol appartiennent aux faces de contact des blocs. Pour un pneumatique, les « conditions usuelles » de roulage sont les conditions d'utilisation définies, par exemple, par la norme ETRTO (Organisation Technique Européenne pour les Pneumatiques et les Jantes). Ces conditions d'utilisation précisent la pression de gonflage de référence correspondant à la capacité de charge du pneu indiquée par son indice de charge et à son code vitesse. Ces conditions d'utilisation peuvent aussi être dites « conditions nominales » ou « conditions d'usage ».

### État de la technique

L'impression 3D ou fabrication additive regroupe les procédés de fabrication de pièces en volume par ajout ou agglomération de matière, par empilement de couches successives. L'impression 3D permet de réaliser un objet réel : un concepteur dessine l'objet 3D grâce à un outil de conception assistée par ordinateur (CAO). Le fichier 3D obtenu est traité par un logiciel spécifique qui organise le découpage en tranches des différentes couches nécessaires à la réalisation de la pièce. Le découpage est envoyé à l'imprimante 3D qui dépose ou solidifie la matière couche par couche jusqu'à obtenir la pièce finale. Le principe reste proche de celui d'une imprimante 2D classique à cette grande différence près : c'est l'empilement des couches qui crée le volume.

La matière première se présente sous forme de poudre, généralement sphérique, d'une granulométrie D90 comprise le plus souvent entre 20 et 45 µm. Une granulométrie D90 signifie que 90 % des particules de la poudre analysée disposent d'un diamètre compris entre 20 et 45 µm. La distribution en poudre dans la machine se fait, soit via un bac d'alimentation dont le niveau est relevé par un piston, soit par une trémie. La poudre est ensuite étalée par un rouleau ou une racle. L'épaisseur de la couche varie selon le matériau, la machine et la puissance du laser mais reste de l'ordre de 20 à 100 µm.

Pour fusionner une couche de poudre, une source projette un faisceau d'énergie sur la surface de cette couche de poudre, en une tache où se produit une telle fusion. Le faisceau d'énergie est ensuite contrôlé de sorte à balayer la surface afin de propager cette fusion sur toute la surface de la couche. A titre d'exemple, le faisceau d'énergie peut être un laser qui est en général d'une puissance de 200W à 1000W.

Souvent, le processus prend place dans une enceinte sous atmosphère contrôlée (gaz neutre, généralement argon + contrôle de la teneur en oxygène résiduel) pour éviter les phénomènes d'oxydation. Le gaz est choisi selon la nature du matériau, mais il s'agit le plus souvent d'argon ou d'azote. La fabrication s'initie à partir d'un plateau, les pièces seront soudées à ce plateau à l'issue de la fabrication et cela nécessitera une opération de découpe.

Conventionnellement, le faisceau d'énergie balaye différentes zones de la surface dans une direction longitudinale et selon un sens aller et selon un sens retour, en alternance.

Il a notamment été proposé de piloter la source d'énergie afin que la tâche ne parcoure pas chaque zone selon un mouvement de translation parfaitement rectiligne dans la direction longitudinale, mais selon un mouvement composé d'une translation dans la direction longitudinale et d'un mouvement oscillatoire (« wobbling » en anglais). Le mouvement oscillatoire oscille notamment dans une direction transversale, de manière à élargir le bain de fusion.

Différents mouvements oscillatoires ont été proposés.

L'un d'entre eux, que l'on appelle généralement « mode circulaire », est tel que le spot du laser suit une trajectoire comprenant des boucles décalées les unes par rapport aux autres dans une direction longitudinale du plateau.

Les états de surface des pièces fabriqués par impression 3D avec un balayage d'un faisceau d'énergie tel que décrit ci-dessus sont caractérisés par une succession de cordons circulaires qui confèrent une apparence inesthétique à la pièce qui peut entraver la réussite de sa commercialisation.

Ce phénomène est observable pour les pneumatiques vulcanisés dans un moule fabriqué par impression 3D. La surface de roulement du pneumatique reproduit le motif inversé de la surface du moule avec des rainures circulaires héritées du moulage.

Les inventeurs se sont donnés pour objectifs d'améliorer l'état de surface du pneumatique moulé sans dégrader le coût de revient industriel, et sans dégrader les performances d'adhérence tout en ayant une esthétique plus conforme à l'attente des clients.

L'invention concerne également le domaine des moules de vulcanisation de pneumatiques notamment des moules de type à secteurs.

Un moule à secteurs comprend plusieurs pièces séparées qui par rapprochement relatif, délimitent un espace de moulage quasi-toroïdal. En particulier, un moule à secteurs comporte deux coquilles latérales pour le moulage des flancs du pneumatique, et plusieurs secteurs périphériques situés entre les coquilles pour le moulage de la bande de roulement du pneumatique. Le rapprochement de toutes ces pièces est assuré par une cinématique appropriée par un mécanisme voulu. L'ébauche crue du futur pneumatique doit être fermement appliquée et maintenue contre le moule pour obtenir des dimensions géométriques et une architecture précise et pour imprimer la sculpture de la bande de roulement.

Pour former les sculptures de la bande de roulement, les secteurs du moule comprennent des éléments en saillie de la surface radialement intérieure des secteurs, ces éléments formant un négatif des sculptures à mouler sur la bande de roulement du pneumatique. Par la suite, ce négatif est désigné sous le terme de "garniture".

Par conséquent, la garniture est donc formée par l'ensemble des éléments de moulage de la bande de roulement comprenant la surface du moule destinée à être la surface de roulement, ainsi que les éléments saillants destinés à former des découpures sur la bande de roulement du pneumatique vulcanisé (rainures circonférentielles et axiales, incisions de lamelles, ...). La garniture englobe également des éléments en creux comme par exemple les témoins d'usure du pneumatique.

En notant qu'une même dimension pneumatique peut être vulcanisée avec plusieurs sculptures différentes en fonction des usages visés, la conception du moule en distinguant d'une part la garniture amovible et d'autre part des supports de fixation, présente de nombreux avantages.

Ainsi, pour adapter un moule à la fabrication d'un pneumatique présentant des sculptures données, il suffit de rapporter successivement les différents éléments de garniture sur chaque bloc support des secteurs du moule.

Plus précisément, une garniture telle qu'utilisée dans l'invention est caractérisée en ce qu'elle comprend :
- une peau comprenant des première et seconde surfaces opposées, la première surface étant destinée à être en contact avec un bloc support d'un moule pour pneumatique, l'épaisseur de la peau étant comprise entre 0,25 et 3 millimètres, et
- une pluralité d'éléments de garniture en saillie et en creux de la seconde surface de la peau, les éléments de garniture étant destinés à former des sculptures d'une partie d'une surface radialement externe d'un pneumatique,
- la peau et les éléments saillants et en creux de la garniture étant réalisés d'un seul tenant par impression 3D.

La garniture qui comprend des éléments saillants, en creux et qui est destinée à être la sculpture de la bande de roulement, est dans certains cas d'une grande complexité de forme en fonction des performances du pneumatique recherchées. La fabrication par impression 3D est adaptée à ce genre de complexité en s'appuyant sur la modélisation par conception assistée par ordinateur de la garniture. En effet, le laser peut être piloté par un ordinateur comprenant une modélisation de la pièce et l'on peut alors fabriquer la pièce par frittage successif de couches de poudre superposées.

Les inventeurs ont utilisé cette technologie de fabrication pour trouver une solution à l'objectif d'amélioration de l'état de surface du pneumatique obtenu par moulage sans dégrader le coût de revient industriel, les performances d'adhérence tout en ayant une esthétique plus conforme à l'attente des clients.

Le document de brevet EP 2 799 250 A1 divulgue un pneumatique présentant des caractéristiques similaires au préambule de la revendication indépendante 1.

### Exposée de l'invention

Cet objectif a été atteint par un pneumatique doté d'une bande de roulement dont des portions de la surface de roulement destinées à être en contact avec un sol comprennent une texture formée par un agencement d'éléments contigus de forme pyramidale, chaque élément de forme pyramidale ayant une base de type parallélogramme positionnée sur la surface de roulement, et un apex situé à une distance radiale H de la base, ladite base étant définie par :
- une première paire de côtés parallèles entre eux distants d'un premier pas P1, et faisant un angle Alpha avec une direction circonférentielle ;
- une deuxième paire de côtés parallèles entre eux distants d'un deuxième pas P2, et faisant un angle Beta avec la direction circonférentielle du pneumatique ;
- la première paire de côtés parallèles, et la deuxième paire de côtés parallèles formant en leur intersection les sommets des bases de type parallélogramme, constituant un maillage des portions de la surface de roulement,
- l'angle Alpha est compris dans l'intervalle entre [15°; 75°], l'angle Beta est compris dans l'intervalle [-75°; -15°], et la distance normale de l'apex H à la base est comprise dans l'intervalle [0.15 mm; 0.5mm].

La texture de la bande de roulement d'un pneumatique de l'invention constitue un maillage des portions de la surface de roulement ne contenant ni des découpures, ni de parties saillantes, ni des parties en creux.

La texture observable sur la bande de roulement comprend un premier faisceau de segments parallèles entre eux faisant un angle Alpha avec la direction circonférentielle compris entre [15°; 75°], et un deuxième faisceau de segments deux à deux parallèles faisant un angle Beta avec la direction circonférentielle compris entre [-75°; -15°]. Les points à l'intersection des segments sont les noeuds du maillage et correspondent aux sommets de parallélogrammes qui constituent la base d'une forme pyramidale dont l'apex est situé dans la direction radialement extérieure passant le centre du parallélogramme.

Dans certains modes de réalisation, l'apex peut être située radialement vers l'intérieure du parallélogramme de manière à former une pyramide inversée en creux.

Les angles Alpha et Beta déterminent l'orientation des parallélogrammes dans le plan de la bande de roulement. Quand Alpha et Beta sont proches de 15° en valeur absolue, le motif de la texture est globalement orienté suivant la direction circonférentielle, et quand Alpha et Beta sont proches de 75°, le motif de la texture est orienté suivant la direction axiale de la bande de roulement.

Les pas P1 et P2 déterminent la surface de la base de la forme pyramidale. Ils correspondent à la demi-longueur des diagonales des parallélogrammes de base.

Préférentiellement, le premier pas P1 et/ou le deuxième pas P2 est constant, et encore préférentiellement, l'angle Beta est égal en valeur absolue à l'angle Alpha. Dans ce mode de réalisation, les parallélogrammes sont des losanges. La texture présente une homogénéité et une symétrie autant dans la direction circonférentielle que dans la direction transversale.

Avantageusement, le premier pas P1 de la première paire de côtés du parallélogramme de base est inférieur ou égal 2*H/Tan(Alpha). Encore avantageusement, le second pas P2 de la deuxième paire de côtés du parallélogramme de base est inférieur ou égal 2*H/Tan(Beta).

Avantageusement, la texture des portions de la surface de roulement a une densité d'éléments de forme pyramidale supérieure ou égale à 10 éléments par centimètre carré.

Un deuxième objet de l'invention est un moule de vulcanisation d'un pneumatique qui comprend une garniture qui reproduit la texture de la première revendication après vulcanisation du pneumatique. La particularité de ce moule est d'avoir une garniture fabriquée par impression 3D.

Plus précisément, l'invention traite également d'un moule de vulcanisation pour pneumatique apte à coopérer avec une presse de cuisson, ledit moule comportant deux coquilles assurant chacune le moulage d'un flanc du pneumatique et une couronne de secteurs assurant le moulage de la bande de roulement du pneumatique, chaque secteur comportant un support et une garniture de moulage située radialement à l'intérieur du support, ladite garniture comportant une peau comprenant des première et seconde surfaces opposées, la première surface étant destinée à être en contact avec un bloc support du moule, la seconde surface de la peau ayant une pluralité d'éléments en saillie et en creux destinés à former la sculpture de la bande de roulement d'un pneumatique après vulcanisation, caractérisé en ce que la seconde surface de la peau de la garniture, entre les éléments saillants et les éléments en creux comprend une texture faite d'un agencement d'éléments contigus de forme pyramidale en creux, chaque élément de forme pyramidale ayant une base de type parallélogramme positionnée sur la peau, et un apex situé à une distance H1 de la base, radialement vers l'intérieur de la garniture.

La distance H1 de l'apex de la forme pyramidale à la base de type parallélogramme positionnée sur la peau de la garniture est déterminée de façon qu'après la vulcanisation du pneumatique dans le moule cette distance soit égale à la distance H définie plus haut.

Préférentiellement, la texture de la peau de la garniture comprend une densité d'éléments de forme pyramidale en creux supérieure ou égale à 10 éléments par centimètre carré.

Enfin un troisième objet de l'invention est un procédé de fabrication par impression 3D qui est utilisé pour la réalisation de la garniture du moule.

L'invention propose un procédé de fabrication par impression 3D de la garniture d'un moule de vulcanisation d'un pneumatique, ladite garniture comportant une peau comprenant des première et seconde surfaces opposées, la première surface étant destinée à être en contact avec un bloc support du moule, la seconde surface de la peau ayant une pluralité d'éléments en saillie et en creux destinés à former la sculpture de la bande de roulement d'un pneumatique après vulcanisation, ledit procédé par impression 3D comportant les étapes suivantes :
a. Balayage par un faisceau d'énergie projeté par un générateur de laser sur la seconde surface de la peau de manière à créer une première série de segments parallèles entre eux faisant un angle Alpha avec la direction circonférentielle compris entre [15°; 75°] ;
b. Balayage du faisceau d'énergie projeté par un générateur de laser sur la seconde surface la peau de manière à créer une deuxième série de segments parallèles entre eux faisant un angle Beta avec la direction circonférentielle compris entre [-15°; -75°] ;
c. Les points à l'intersection des segments de la première série et de la deuxième formant les noeuds d'un maillage et correspondant aux sommets de parallélogrammes, balayage du faisceau d'énergie projeté par un générateur de laser au centre de chaque parallélogramme de manière à creuser une forme pyramidale dont l'apex est positionné dans la direction normale vers l'intérieur de la garniture.

### Description des Figures

L'invention sera mieux comprise à la lecture de la description qui va suivre, donnée uniquement à titre d'exemple et faite en se référant aux dessins dans lesquels :

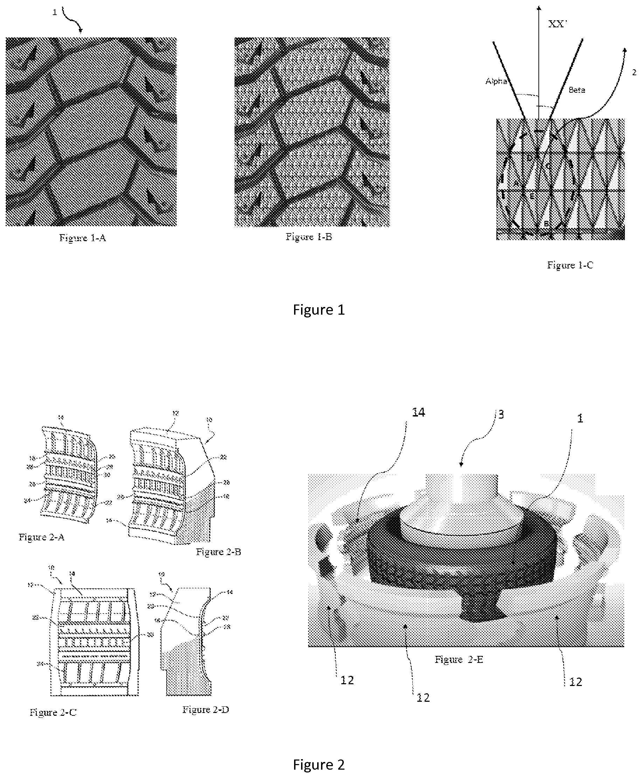

- Les figures 1-A, est un extrait de la bande de roulement obtenu après la vulcanisation du pneumatique représentant la texture proposée par l'invention. La figure 1-B est la même représentation que la figure 1-A mais vue du côté de la conception assistée par ordinateur (CAO). La vue 1-C est un grossissement de la figure 1-B qui met en évidence la construction de la texture de l'invention.
- Les figures de 2-A à 2-E illustrent la terminologie des moules utilisée couramment. La figure 1-A est une vue en perspective d'une garniture de moule, la figure 2-B est une vue en perspective d'un secteur de moule comprenant un bloc support et la garniture représentée sur la figure 2-A fixée sur ledit bloc support; la figure 2-C est une vue du dessus du secteur de la figure 2-B, la figure 2-D est une vue en coupe du secteur de la figure 2-B enfin la figure 2-E est un exemple de moule avec ses secteurs comprenant les garnitures qui y sont fixées.
- Les figures 3-A, 3-B, et 3-C représentent des vues partielles de garnitures de moules obtenues par impression 3D. Le graphique 3-B est un grossissement de la vue 3-A pour mettre en évidence la texture proposée par l'invention, en comparaison à des textures classiques visualisées sur la figure 3-C formées de motifs en forme de cercles concentriques. La figure 3-D est un grossissement de la figure 3-B avec le motif de texture de l'invention montrant la texture avec des éléments de forme pyramidale.
- La figure 4 représente un moule dont la garniture est fabriquée par impression 3D.
- La figure 5 représente le schéma du principe de fonctionnement de la fabrication par impression 3D. La garniture avec ses composantes, peau, éléments saillants, éléments en creux sont fabriqués d'un seul tenant par impression 3D.

### Description détaillée de l'invention

La figure 1-C montre les détails de la construction du motif de la bande de roulement du pneumatique avec la référence générale 1. On peut voir le motif de forme pyramidale (ABCDE), représenté par la référence 2, dont la base est le parallélogramme (ABCD). Les côtés AB et et DC sont parallèles et font avec une direction circonférentielle (XX') un angle Alpha, quant aux côtés DA et CD, ils sont également parallèles et font un angle Beta avec cette même direction circonférentielle. L'apex E est positionnée radialement extérieurement à la surface de roulement. La figure 1-B est la modélisation par conception assistée par ordinateur de la surface de la bande de roulement à partir du motif représenté sur la figure 1-C, et enfin la figure 1-A est un extrait de la surface de roulement après vulcanisation du pneumatique.

La figure 2-A représente une portion de garniture 14 limitée au secteur visualisé sur la figure 2-B. Plus précisément, une garniture 14 telle qu'utilisée dans l'invention est caractérisée en ce qu'elle comprend :
- une peau 18 comprenant des première 20 et seconde 22 surfaces opposées, la première surface étant destinée à être en contact avec un bloc support 12 d'un moule pour pneumatique, l'épaisseur de la peau 18 étant comprise entre 0,25 et 3 millimètres pour un moule de vulcanisation d'un pneumatique tourisme, et
- une pluralité d'éléments de garniture en saillie et en creux 24 de la seconde surface 22 de la peau, les éléments de garniture 24 étant destinés à former des sculptures d'une partie d'une surface radialement externe d'un pneumatique.

On a représenté sur la figure 2-B un secteur, désigné par la référence générale 10 d'un moule à secteurs pour la vulcanisation d'un pneumatique. Le secteur 10 comprend un bloc support 12 et une garniture 14 rapportée sur le bloc support 12.

Le bloc support 12 est formé par un bloc en acier massif comprenant notamment une surface support 16 destinée à recevoir la garniture 14. La surface support 16 est sensiblement lisse et présente une forme épousant sensiblement la courbure générale de la bande de roulement du pneumatique à mouler.

La garniture 14 comprend une peau 18 contenant des première 20 et seconde 22 surfaces opposées, la première surface 20 étant destinée à être en contact avec la surface support 16 du bloc support 12.

La peau 18 comprend en outre une pluralité d'éléments 24 de garniture en saillie de la seconde surface 22, les éléments 24 de garniture étant destinés à former les sculptures d'une partie de la bande de roulement du pneumatique à mouler.

Parmi les éléments 24 de garniture, on distingue notamment des lamelles 26 destinées à former des fentes circonférentielles dans la bande de roulement du pneumatique, ou des cordons circonférentiels 28 destinés à former un sillon longitudinal sur la bande de roulement du pneumatique.

Les différents cordons 28 sont reliés par des lamelles axiales 30 de manière à former un réseau d'éléments 24 de garniture.

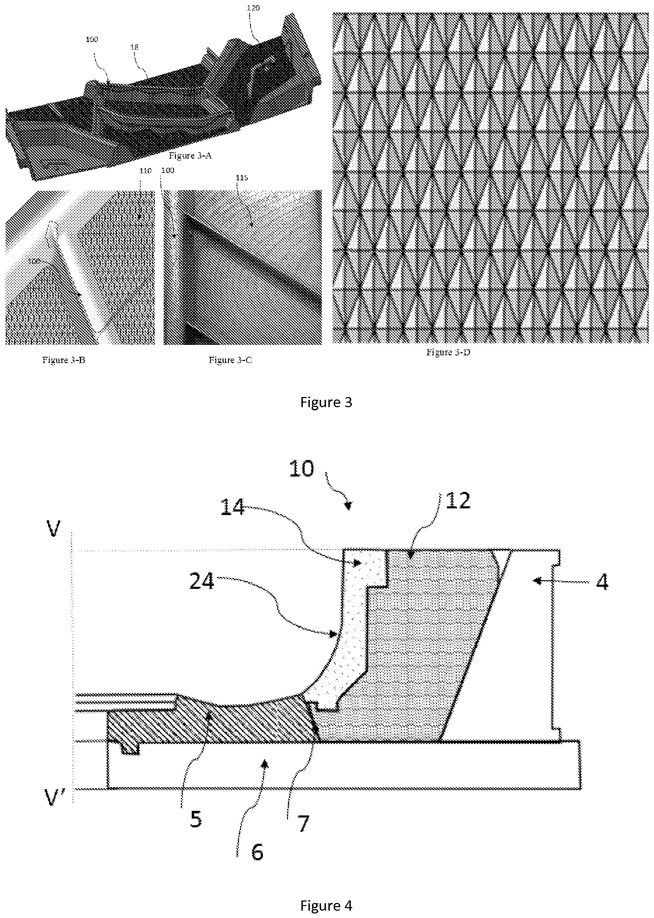

La figure 2-E représente le moule de référence générale 3 en position d'ouverture. Les coquilles qui sont destinées à mouler les flancs du pneumatique ne sont pas représentées. Chaque secteur est réalisé généralement en acier ou en fonte. La garniture de moulage 14 est en général réalisée en un alliage d'aluminium. De manière connue, plusieurs secteurs 10 sont agencés côté à côte circonférentiellement autour de l'axe de symétrie V-V' du moule et forment un anneau, les secteurs étant mobiles radialement grâce un dispositif comprenant une couronne (4) qui englobe les secteurs. La couronne 4 est représentée sur la figure 4.

Les figures 3-A, 3-B, 3-C et 3-D sont relatives au moule obtenu par impression 3D. La figure 3-A est une portion de la garniture 14 comportant la peau 18 avec la texture de l'invention mais côté moule, c'est-à-dire que c'est le motif inversé de celui de la bande de roulement du pneumatique. Les références 100 et 120 sont des exemples d'éléments saillants et en creux qui imprimeront la bande de roulement après moulage.

La figure 3-B est un grossissement de la portion de garniture de la figure 3-A qui montre plus nettement le motif de l'invention110 portée par la peau 18 de la garniture 14.

La figure 3-C représente l'état de surface classique obtenu par impression 3D avec des cercles concentriques laissant apparaître des cordons 115 qui imprime après vulcanisation le pneumatique. La figure 3-A est précisément l'amélioration de cet état de surface 3-C.

La figure 4 illustre par une vue en coupe partielle d'un secteur 10 de moule de vulcanisation où l'on voit les principales pièces du moule. La garniture 14 est fixée sur un support 12, réalisé généralement en acier ou en fonte. La garniture 14 est en général réalisée en un alliage d'aluminium et porte le négatif de la sculpture de la bande de roulement du pneumatique. Une couronne 4 ceinture les secteurs 10 de manière à permettre les opérations d'ouverture et de fermeture du moule. La coquille 5 assure le moulage des flancs et comprend une interface 7 avec la garniture 14. La coquille 5 et la couronne 4 sont portées par un plateau 6. La couronne 4 a une surface radialement intérieure de forme tronconique qui coopère avec la surface radialement extérieure de forme tronconique des secteurs 10.

La garniture 14 est fabriquée par impression 3D. Le motif de la figure 3-D formé autour d'une forme pyramidale 2 est reproduit sur la surface 22 de la peau 18 entre les éléments de garniture en saillie et en creux 24.

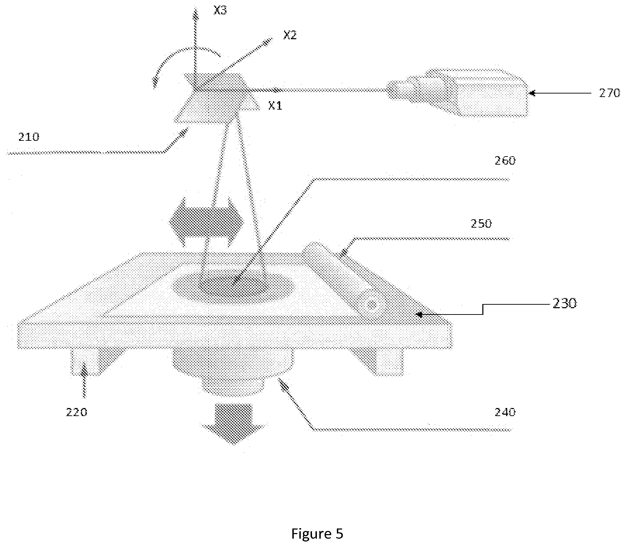

La figure 5 montre le schéma de principe de la fabrication par impression 3D.

En amont de la fabrication par impression 3D, une première étape consiste à modéliser la pièce à fabriquer à l'aide d'un logiciel de conception assistée par ordinateur (CAO) qui définit les contraintes morphologiques de la pièce à réaliser. L'étape suivante est l'importation des données précédentes dans un logiciel permettant de définir la stratégie d'élaboration de l'objet, ainsi que les paramètres du procédé, puis des instructions sont transmises à la machine de fabrication par impression 3D pour la production de l'objet sous sa forme physique.

Ainsi sur la figure 5, la pièce à réaliser se fabrique progressivement sur un plateau amovible 230 qui est repéré par un système d'axe local (X1, X2, X3). Le plan (X1, X2) étant parallèle au plan du plateau 230, et la direction X3 étant orthogonale à ce même plan. Le plateau 230 est alimenté en poudre par la goulotte d'alimentation 220, un système d'égalisation de la couche de poudre 250 étale la poudre sur une épaisseur homogène. Le générateur de laser 270 dirige le faisceau laser sur un système optique 210. Le déplacement du laser sur le plateau 230 se fait à l'aide d'une chaîne optique 210 qui est en fait un système de miroirs oscillants pilotés par les données de la CAO. La pièce fabriquée 260 est soudée au support 240.

Pour réaliser la garniture du moule, génératrice de la texture de la surface de roulement du pneumatique, le laser du procédé de fabrication par impression 3D trace sur la peau de la garniture un premier faisceau de segments parallèles entre eux faisant un angle Alpha avec la direction circonférentielle compris entre [15°; 75°], et un deuxième faisceau de segments deux à deux parallèles faisant un angle Beta avec la direction circonférentielle compris entre [-75°; -15°]. Les points à l'intersection des segments sont les noeuds du maillage et correspondent aux sommets des parallélogrammes. Chaque parallélogramme est creusé en son centre par le laser de manière à former une pyramide inversée.

Les principaux paramètres du procédé de fabrication par impression 3D utilisés pour l'invention sont : la puissance du laser [100 - 1000 W], la vitesse de balayage du laser [0.1 - 5 mm.s-1], le diamètre du spot laser [50 - 200 µm], réglable en ajustant la distance entre la surface de la couche de poudre et le point focal du laser, l'épaisseur de la couche de poudre [20 - 200 µm], l'espacement de lasage [25 - 200 µm] qui correspond à l'espacement entre deux lignes de passage du laser, adjacentes et parallèles. Il est généralement inférieur au diamètre du spot laser afin d'obtenir une zone recouvrement.

L'invention a été décrite en relation à un moule de type à secteurs. Elle peut également être mise en oeuvre en relation avec un moule d'un autre type.

### Essais

Pour valider l'invention, l'essai a été réalisé sur un pneumatique de dimension normalisée selon l'ETRTO (ETRTO : Organisation technique européenne des pneus et jantes): 13R22.5 TL 156/151 K. La pression de gonflage est de 875 kilos Pascal pour une charge à porter en montage simple de 3450 kilos.

Le pneumatique a été testé selon le règlement UN/ECE/R117 qui porte sur les seuils de performances obligatoires avant la commercialisation des pneumatiques en Europe émis par la Commission Economique de l'Organisation des Nations Unies pour l'Europe (UN/ECE).

Les résultats des tests réalisés concernent ici l'adhérence sur sols mouillé et enneigé.

Par rapport au témoin prévu par le règlement (SRTT), le pneumatique de l'invention présente une performance améliorée en adhérence sur sol mouillé de 120%, et sur neige une amélioration de 185%.

L'invention a été présentée pour des pneumatiques tourisme et poids lourd, mais en réalité elle est applicable à tout type de pneumatique.

## Revendications

1. Pneumatique (1) doté d'une bande de roulement dont des portions de la surface de roulement destinées à être en contact avec un sol comprennent une texture formée par un agencement d'éléments contigus de forme pyramidale, chaque élément de forme pyramidale ayant une base de type parallélogramme positionnée sur la surface de roulement, et un apex situé à une distance radiale H de la base, ladite base étant définie par :
▪ une première paire de côtés parallèles entre eux distants d'un premier pas P1, et faisant un angle alpha avec une direction circonférentielle du pneumatique ;
▪ une deuxième paire de côtés parallèles entre eux distants d'un deuxième pas P2, et faisant un angle beta avec la direction circonférentielle ;
▪ la première paire de côtés parallèles, et la deuxième paire de côtés parallèles formant en leur intersection les sommets des bases de type parallélogramme, constituant un maillage des portions de la surface de roulement,
**caractérisé en ce que** l'angle Alpha est compris dans l'intervalle entre [15°; 75°], **en ce que** l'angle Beta est compris dans l'intervalle [-75°; -15°], **et en ce que** la distance normale de l'apex H à la base est comprise dans l'intervalle [0.15 mm; 0.5mm].

2. Pneumatique (1) selon la revendication 1, **dans lequel** le premier pas P1 et/ou le deuxième pas P2 est constant.

3. Pneumatique (1) selon l'une des revendications précédentes, **dans lequel** l'angle Beta est égal en valeur absolue à l'angle Alpha.

4. Pneumatique (1) selon l'une des revendications précédentes, **dans lequel** le premier pas P1 de la première paire de côtés est inférieur ou égal 2*H/Tan(Alpha).

5. Pneumatique (1) selon l'une des revendications précédentes, **dans lequel** le premier pas P2 de la première paire de côtés est inférieur ou égal 2*H/Tan(Beta).

6. Pneumatique (1) selon l'une des revendications précédentes, **dans lequel** la texture des portions de la surface de roulement a une densité d'éléments de forme pyramidale supérieure ou égale 10 éléments par centimètre carré.

7. Moule (3) de vulcanisation pour un pneumatique selon l'une des revendications 1 à 6, apte à coopérer avec une presse de cuisson, ledit moule comportant deux coquilles (5) assurant chacune le moulage d'un flanc du pneumatique et une couronne (4) de secteurs (10) assurant le moulage de la bande de roulement du pneumatique, chaque secteur (10) comportant un support (12) et une garniture (14) de moulage située radialement à l'intérieur du support (12), ladite garniture (14) comportant une peau (18) comprenant des première (20) et seconde (22) surfaces opposées, la première surface (20) étant destinée à être en contact avec un bloc support (12) du moule, la seconde surface (22) de la peau ayant une pluralité d'éléments en saillie et en creux (24) destinés à former la sculpture de la bande de roulement d'un pneumatique après vulcanisation, **caractérisé en ce que** la seconde surface (22) de la peau (18) de la garniture (14), entre les éléments saillants et les éléments en creux (24) comprend une texture faite d'un agencement d'éléments contigus de forme pyramidale en creux, chaque élément de forme pyramidale ayant une base de type parallélogramme positionnée sur la peau, et un apex situé à une distance radiale H1 de la base, radialement vers l'intérieur de la garniture (14).

8. Moule (3) selon la revendication 7 **dans lequel** la texture de la peau (18) de la garniture (14) comprend une densité d'éléments de forme pyramidale en creux supérieure ou égale à 10 éléments par centimètre carré.

9. Procédé de fabrication par impression 3D de la garniture (14) d'un moule de vulcanisation d'un pneumatique selon l'une des revendications de 7 ou 8, ladite garniture (14) comportant une peau (18) comprenant des première (20) et seconde (22) surfaces opposées, la première surface (20) étant destinée à être en contact avec un bloc support (12) du moule, la seconde surface (22) de la peau (18) ayant une pluralité d'éléments en saillie et en creux destinés à former la sculpture de la bande de roulement d'un pneumatique après vulcanisation, ledit procédé par impression 3D comportant les étapes suivantes :
a. Balayage par un faisceau d'énergie projeté par un générateur de laser (270) sur la seconde surface (22) de la peau (18) de manière à créer une première série de segments parallèles entre eux faisant un angle Alpha avec la direction circonférentielle compris entre [15°; 75°] ;
b. Balayage du faisceau d'énergie projeté par un générateur de laser (270) sur la seconde surface (22) la peau (18) de manière à créer une deuxième série de segments parallèles entre eux faisant un angle Beta avec la direction circonférentielle compris entre [-15°; -75°] ;
c. Les points à l'intersection des segments de la première série et de la deuxième formant les noeuds d'un maillage et correspondant aux sommets de parallélogrammes, balayage du faisceau d'énergie projeté par un générateur de laser (270) au centre de chaque parallélogramme de manière à creuser une forme pyramidale dont l'apex est positionnée dans la direction normale vers l'intérieur de la garniture.

## Patentansprüche

1. Reifen (1), der mit einer Lauffläche versehen ist, von der Abschnitte der Laufoberfläche, die mit einem Boden in Kontakt stehen sollen, eine Textur besitzen, die durch eine Anordnung von aneinander grenzenden Elementen mit Pyramidenform ausgebildet ist, wobei jedes Element mit Pyramidenform eine Basis vom Parallelogrammtyp, die auf der Laufoberfläche positioniert ist, und eine Spitze, die in einer radialen Distanz H von der Basis liegt, aufweist, wobei die Basis definiert ist durch:
▪ ein erstes Paar von zueinander parallelen Seiten, die um einen ersten Abstand P1 beabstandet sind und einen Winkel Alpha mit einer Umfangsrichtung des Reifens bilden;
▪ ein zweites Paar von zueinander parallelen Seiten, die in einem zweiten Abstand P2 beabstandet sind und einen Winkel Beta mit der Umfangsrichtung bilden;
▪ wobei das erste Paar von parallelen Seiten und das zweite Paar von parallelen Seiten an ihrem Schnittpunkt die Scheitel der Basen vom Parallelogrammtyp bilden, die ein Netz der Abschnitte der Laufoberfläche bilden,
**dadurch gekennzeichnet, dass** der Winkel Alpha im Intervall zwischen [15°; 75°] liegt, dass der Winkel Beta im Intervall [-75°; -15°] liegt und dass die normale Distanz der Spitze H zur Basis im Intervall [0,15 mm; 0,5 mm] liegt.

2. Reifen (1) nach Anspruch 1, wobei der erste Abstand P1 und/oder der zweite Abstand P2 konstant sind.

3. Reifen (1) nach einem der vorangehenden Ansprüche, wobei der Winkel Beta dem Absolutwert nach gleich dem Winkel Alpha ist.

4. Reifen (1) nach einem der vorangehenden Ansprüche, wobei der erste Abstand P1 des ersten Paars von Seiten geringer als oder gleich 2*H/Tan(Alpha) ist.

5. Reifen (1) nach einem der vorangehenden Ansprüche, wobei der erste Abstand P2 des ersten Paars von Seiten geringer als oder gleich 2*H/Tan(Beta) ist.

6. Reifen (1) nach einem der vorangehenden Ansprüche, wobei die Textur der Abschnitte der Laufoberfläche eine Dichte von Elementen mit Pyramidenform aufweist, die größer als oder gleich 10 Elemente pro Quadratzentimeter ist.

7. Vulkanisationsform (3) für einen Reifen nach einem der Ansprüche 1 bis 6, die mit einer Brennpresse zusammenwirken kann, wobei die Form zwei Schalen (5), die jeweils das Formen einer Flanke des Reifens sicherstellen, und einen Kranz (4) von Sektoren (10), die das Formen der Lauffläche des Reifens sicherstellen, umfasst, wobei jeder Sektor (10) eine Abstützung (12) und einen Formbelag (14) umfasst, der radial zum Inneren der Abstützung (12) liegt, wobei der Belag (14) eine Haut (18) mit einer ersten (20) und einer zweiten (22) gegenüberliegenden Oberfläche umfasst, wobei die erste Oberfläche (20) mit einem Tragblock (12) der Form in Kontakt stehen soll, die zweite Oberfläche (22) der Haut mehrere vorstehende und vertiefte Elemente (24) aufweist, die das Profil der Lauffläche eines Reifens nach der Vulkanisation bilden sollen, **dadurch gekennzeichnet, dass** die zweite Oberfläche (22) der Haut (18) des Belags (14) zwischen den vorstehenden Elementen und den vertieften Elementen (24) eine Textur umfasst, die aus einer Anordnung von aneinander grenzenden vertieften Elementen mit Pyramidenform hergestellt ist, wobei jedes Element mit Pyramidenform eine Basis vom Parallelogrammtyp, die auf der Haut positioniert ist, und eine Spitze, die in einer radialen Distanz H1 von der Basis radial zum Inneren des Belags (14) liegt, aufweist.

8. Form (3) nach Anspruch 7, wobei die Textur der Haut (18) des Belags (14) eine Dichte von vertieften Elementen mit Pyramidenform umfasst, die größer als oder gleich 10 Elemente pro Quadratzentimeter ist.

9. Verfahren zur Herstellung des Belags (14) einer Vulkanisationsform eines Reifens nach einem der Ansprüche 7 oder 8 durch 3D-Druck, wobei der Belag (14) eine Haut (18) mit einer ersten (20) und einer zweiten (22) entgegengesetzten Oberfläche umfasst, wobei die erste Oberfläche (20) mit einem Tragblock (12) der Form in Kontakt stehen soll, die zweite Oberfläche (22) der Haut (18) mehrere vorstehende und vertiefte Elemente aufweist, die das Profil der Lauffläche eines Reifens nach Vulkanisation bilden sollen, wobei das Verfahren durch 3D-Druck die folgenden Schritte umfasst:
a. Abtasten der zweiten Oberfläche (22) der Haut (18) mit einem Energiestrahl, der durch einen Lasergenerator (270) projiziert wird, um eine erste Reihe von zueinander parallelen Segmenten zu erzeugen, die einen Winkel Alpha mit der Umfangsrichtung bilden, der zwischen [15°; 75°] liegt;
b. Abtasten der zweiten Oberfläche (22) der Haut (18) mit dem Energiestrahl, der durch einen Lasergenerator (270) projiziert wird, um eine zweite Reihe von zueinander parallelen Segmenten zu erzeugen, die einen Winkel Beta mit der Umfangsrichtung bilden, der zwischen [-15; -75°] liegt;
c. wobei die Punkte am Schnittpunkt der Segmente der ersten Reihe und der zweiten die Knoten eines Netzes bilden und den Scheiteln von Parallelogrammen entsprechen, Abtasten im Zentrum jedes Parallelogramms mit dem Energiestrahl, der durch einen Lasergenerator (270) projiziert wird, um eine Pyramidenform auszuhöhlen, deren Spitze in der normalen Richtung zum Inneren des Belags positioniert ist.

## Claims

1. Tyre (1) provided with a tread of which portions of the tread surface that are intended to be in contact with the ground comprise a texture formed by an arrangement of contiguous elements of pyramidal shape, each element of pyramidal shape having a base of parallelogram type positioned on the tread surface, and an apex situated at a radial distance H from the base, said base being defined by:
▪ a first pair of mutually parallel sides spaced apart from one another by a first pitch P1, and forming an angle alpha with a circumferential direction of the tyre,
▪ a second pair of mutually parallel sides spaced apart from one another by a second pitch P2, and forming an angle beta with the circumferential direction,
▪ the first pair of parallel sides and the second pair of parallel sides, which form, at their intersection, the vertices of the bases of parallelogram type, constituting a mesh of the portions of the tread surface,
**characterized in that** the angle Alpha is in the range [15°; 75°], **in that** the angle Beta is in the range [-75°; -15°], **and in that** the normal distance from the apex H to the base is in the range [0.15 mm; 0.5 mm].

2. Tyre (1) according to Claim 1, **wherein** the first pitch P1 and/or the second pitch P2 is constant.

3. Tyre (1) according to either of the preceding claims, **wherein** the angle Beta is equal in terms of absolute value to the angle Alpha.

4. Tyre (1) according to one of the preceding claims, **wherein** the first pitch P1 of the first pair of sides is less than or equal to 2*H/Tan (Alpha).

5. Tyre (1) according to one of the preceding claims, **wherein** the first pitch P2 of the first pair of sides is less than or equal to 2*H/Tan (Beta).

6. 12. Tyre (1) according to one of the preceding claims, **wherein** the texture of the portions of the tread surface has a density of elements of pyramidal shape that is greater than or equal to 10 elements per square centimetre.

7. Vulcanization mould (3) for a tyre according to one of Claims 1 to 6, able to cooperate with a curing press, said mould having two shells (5) that each ensure the moulding of a sidewall of the tyre and a ring (4) of sectors (10) that ensures the moulding of the tread of the tyre, each sector (10) having a support (12) and a moulding lining (14) situated radially on the inside of the support (12), said lining (14) having a skin (18) comprising opposing first (20) and second (22) surfaces, the first surface (20) being intended to be in contact with a support block (12) of the mould, the second surface (22) of the skin having a plurality of protruding and recessed elements (24) intended to form the tread pattern of the tread of a tyre after vulcanization, **characterized in that** the second surface (22) of the skin (18) of the lining (14), between the protruding elements and the recessed elements (24), comprises a texture made of an arrangement of recessed contiguous elements of pyramidal shape, each element of pyramidal shape having a base of parallelogram type positioned on the skin, and an apex situated at a radial distance H1 from the base, radially towards the inside of the lining (14).

8. Mould (3) according to Claim 7, **wherein** the texture of the skin (18) of the lining (14) comprises a density of recessed elements of pyramidal shape that is greater than or equal to 10 elements per square centimetre.

9. Method for manufacturing, by 3D printing, the lining (14) of a mould for vulcanizing a tyre according to either of Claims 7 and 8, said lining (14) having a skin (18) comprising opposing first (20) and second (22) surfaces, the first surface (20) being intended to be in contact with a support block (12) of the mould, the second surface (22) of the skin (18) having a plurality of protruding and recessed elements intended to form the tread pattern of the tread of a tyre after vulcanization, said 3D printing method involving the following steps:
a. Scanning by a beam of energy projected by a laser generator (270) onto the second surface (22) of the skin (18) so as to create a first series of mutually parallel segments forming an angle Alpha with the circumferential direction of between [15°; 75°];
b. Scanning of the beam of energy projected by a laser generator (270) onto the second surface (22) of the skin (18) so as to create a second series of mutually parallel segments forming an angle Beta with the circumferential direction of between [-15°; -75°];
c. The points at the intersection of the segments of the first series and of the second forming the nodes of a mesh and corresponding to the vertices of parallelograms, scanning of the beam of energy projected by a laser generator (270) at the centre of each parallelogram so as to hollow out a pyramidal shape of which the apex is positioned in the normal direction towards the inside of the lining.
